# EUROPEAN PATENT SPECIFICATION

(11) **EP 4 215 427 B1**
(45) Date of publication and mention of the grant of the patent: **05.11.2025**
(21) Application number: 22315017.8
(22) Date of filing: 20.01.2022
(51) Int. Cl.: B61D 17/06, B61D 17/20

(54) **METHOD OF ASSEMBLING AN INTERIOR MODULE IN A CAR BODY OF A RAIL VEHICLE AND ASSOCIATED CAR BODY**
VERFAHREN ZUR MONTAGE EINES INNENRAUMMODULS IN EINEM WAGENKASTEN EINES SCHIENENFAHRZEUGS UND ZUGEHÖRIGER WAGENKASTEN
PROCÉDÉ D'ASSEMBLAGE D'UN MODULE INTÉRIEUR DANS UNE CARROSSERIE DE VOITURE D'UN VÉHICULE FERROVIAIRE ET CARROSSERIE DE VOITURE ASSOCIÉE

(43) Date of publication of application: 26.07.2023
(73) Proprietor: ALSTOM Holdings, 93400 Saint-Ouen-sur-Seine (FR)
(72) Inventor: Hortmann, M. Harald, 10119 Berlin (DE); Liesenberg, Burkhart, 16548 Glienicke/Nordbahn (DE); Rein, Arne Ingo, 23936 Testorf-Steinfort (DE); Stengel, Dietmar, 16727 Oberkrämer (DE)
(74) Representative: Alatis

(56) References cited:
- EP-A1- 1 353 833
- EP-A1- 2 130 738
- EP-A1- 2 217 483
- EP-A1- 3 939 851
- WO-A1-2014/040894
- US-A1- 2021 114 631

## Description

### TECHNICAL FIELD OF THE INVENTION

The present invention relates to a method of assembling a ceiling module, into a car body of a rail vehicle.

### BACKGROUND ART

Where the assembly of the different constituent parts of the car body shell involves welding operations, these welding operations must be completed before painting of the inner part of the car body shell and the assembly of the inner equipment of the car body can start. Where at least some of the panels of the car body shell which have to be welded extend the whole length of the vehicle, such as disclosed in EP 1 043 206, the welding operations prevent the installation of the interior equipment until the assembly of the entire car body shell has been completed. With such a sequence of operations, the interior fittings of the rail vehicle, which may include the ceiling, flooring, interior panels, cabling, lighting and/or insulation, must be inserted in the vehicle through the side doors of the car body.

In the case of a commuter train provided with wide side door openings and large entry platforms evenly spaced at short intervals on each side of the car body, the installation of the interior fittings through the side openings does not present a difficulty.

In the case of inter-regional or intercity trains, however, the door openings are narrower and located at the ends of the rail car in order to minimise the entry space and to maximise the space allocated to the passenger area. Moreover, most elements of the interior outfit are larger and heavier than for commuter trains. Thus, the installation of the interior fittings becomes particularly difficult and results in a considerable loss of time during assembly because of the limited space available through the side doors.

One option is to use the gangway openings at the ends of the car body, if they are wide enough, as is the case e.g. for of articulated trains with Jacobs bogies. If the gangway openings are narrow, it is also possible to insert wide modules by orienting their width in the direction of the height of the opening and then rotating them by 90° after insertion into the car body. The step of pivoting a wide module inside the car body, however, must be controlled from outside the vehicle for obvious safety reasons and is therefore delicate.

Alternatively, it has been suggested in prior art document EP2130738 that the car body of a rail vehicle can be manufactured from several modules including a doorless tubular module with two open ends and two end modules with lateral door openings and that large interior fittings can be inserted into the tubular module through one of the open ends of the tubular module before the associated end module is mechanically fastened to the open end of the tubular module. Care must be taken, however, during the assembly of the interior fitting, since the tubular module has a limited rigidity until the two end modules have been attached. Moreover, the step of assembling the end modules may be time consuming.

A passenger rail vehicle configured for the fitting of a single-piece passenger compartment floor which covers the entire passenger compartment base is disclosed in WO2014040894A1. At least one end face of the vehicle body comprises a horizontally arranged opening, the dimensions of which enable the introduction of the single-piece passenger compartment floor into the vehicle body. The opening is substantially arranged in the fastening plane of the single-piece passenger compartment floor. The opening of the end face comprises fastening means for fitting stability-enhancing components.

There remains a need for a method of assembling other wide interior modules, and more specifically ceiling modules, into a car body of a rail vehicle.

### SUMMARY OF THE INVENTION

According to a first aspect of the invention, there is provided a method of assembling a ceiling module in a car body of a rail vehicle, the car body having a roof, an underframe, side walls and at least one end wall assembled with one another so as to define an interior space of the car body, the end wall being provided with a multipurpose opening, the ceiling module having a length, a width and a thickness, In a first step of the method the ceiling module is introduced into the interior space of the car body through a large width section of the multipurpose opening with the width of the ceiling module extending in a width direction of the large width section of the multipurpose opening. In a subsequent step, the large width section of the multipurpose opening is partially closed with one or more structural elements structurally affixed to the end wall such as to delineate with one or more small width sections of the multipurposed opening a gangway opening having a gangway width smaller than the width of the ceiling module.

The structural elements provide additional strength to the end wall and contribute to the overall rigidity of the car body.

The multipurpose opening is cross-shaped before the ceiling module is introduced into the interior space, the large width section being located between an upper small width section and a lower small width section of the multipurpose opening.

The ceiling module is introduced into the interior space of the car body through the large width section of the multipurpose opening either by means of temporary tracks extending through the multipurpose opening in a length direction of the car body. Preferably, the temporary tracks are temporally fixed to the car body to achieve great accuracy or by means of jig carried by a supporting structure supported on the ground outside the car body.

The ceiling module may have a framework to support various pieces of equipment. Before being introduced into the interior space, the ceiling module is preferably provided with one or more of the following: harnesses, high-voltage electric equipment, low-voltage electric equipment, ventilation ducts, thermal insulation, acoustic insulation, interior panels, luggage racks, signalisation equipment, lighting. The thermal insulation may be provided on a top surface of the ceiling module.

In one embodiment, the width of the ceiling module is greater than 1500 mm, for example greater than 1800 mm, and preferably smaller than 2400 mm, preferably smaller than 2200 mm. The width of the ceiling module is preferably chosen such that the module can be transported flat in standard containers.

In one embodiment, the gangway width is smaller than 1500 mm, and preferably greater than 1000 mm.

In one embodiment, the length of the ceiling module is larger than the width of the ceiling module, and preferably larger than 2000 mm, e.g. larger than 3000 mm, and preferably smaller than 9000 mm, e.g. smaller than 6000 mm.

As an example, the ceiling of the rail vehicle may include several wide ceiling modules, which are introduced one by one through the large width section of the multipurpose opening and are assembled end to end in the interior space of the vehicle, either before they are fixed to the car body or while they are fixed one by one to the car body.

In one embodiment, once the one or more structural elements have been structurally fixed to the end wall, at least one of the one or more structural elements is located between the gangway opening and a side opening defined in an uncovered part of the large width section of the multipurpose opening. There may be more than one side opening, e.g. one on each side of the gangway. The method may include inserting jumper cables and/or ducts through the one or more side openings.

In a preferred embodiment, the one or more structural elements have a flat outside face flush with a flat outside face of the end wall. The method may include a step of attaching a gangway in a sealed manner to the flat outside face of the end wall and to the flat outside face of the structural elements.

In one embodiment, the one or more structural elements are structurally fixed to the end wall by means of mechanical fasteners, in particular rivets, screws or bolts. Preferably, at least some of the mechanical fasteners have a head and a stem protruding from the head, and the structural elements and/or the end wall are provided with bores for the stems of the mechanical fasteners and counterbores to accommodate the heads of the mechanical fasteners on an outside face of the end wall and/or of the one or more structural elements.

Welding may be an alternative option for structurally fixing the structural elements to the end wall.

The invention also relates to a car body of a rail vehicle with a ceiling module assembled in the car body by the method described hereinbefore. More specifically, it also relates to a car body of a rail vehicle comprising a roof, an underframe, side walls and at least one end wall assembled with one another so as to define an interior space of the car body, the end wall being provided with a multipurpose opening. The multipurpose opening is cross-shaped before the ceiling module is introduced into the interior space, the large width section being located between an upper small width section and a lower small width section of the multipurpose opening. The car body further comprises a ceiling module having a length, a width and a thickness. The large width section of the multipurpose opening has a width greater than the width of the ceiling module and is partially closed with one or more structural elements structurally affixed to the end wall such as to delineate, with the upper and lower small width sections of the multipurposed opening, a gangway opening having a gangway width smaller than the width of the ceiling module.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- figure 1 is a side view of a car body of a rail vehicle before installing a ceiling module into the car body,
- figure 2 is longitudinal section of the car body of figure 1 during and after installing a ceiling module into an interior space of the car body,
- figure 3 is rear view of an end wall of the car body of figure 1, before installing the ceiling module,
- figure 4 is a rear view of the end wall of the car body of figure 2, while the ceiling module is being introduced into the interior space of the car body through a multipurpose opening in the end wall,
- figure 5 is a rear view of the end wall of the car body of figure 2, after the ceiling module has been installed and the multipurpose opening has been partially closed with two structural plates,
- figure 6 is a detail A of figure 5,
- figure 7 is a cross-section through line B-B of figure 6, and
- figure 8 is a detail C of figure 7.

Corresponding reference numerals refer to the same or corresponding parts in each of the figures.

### DETAILED DESCRIPTION OF A PREFERRED EMBODIMENT

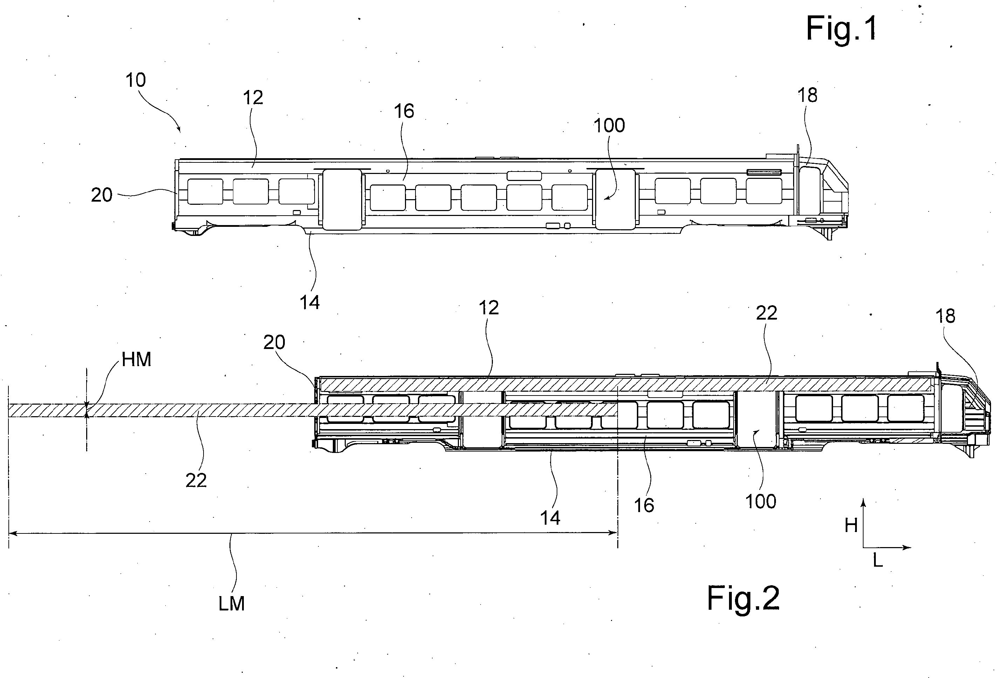

With reference to figure **1****,** a car body **10** of a rail vehicle comprises a roof **12,** an underframe **14,** side walls **16,** a driver's cabin structure **18** and an end wall **20** assembled with one another so as to define an interior space **100** of the car body. At this stage of the assembly process, a ceiling module **22** of large dimensions has to be inserted into the interior space **100** and installed. As illustrated in figure **2****,** this ceiling module is first inserted through the end wall **20** in a length direction **L** of the car body **10** and then affixed to the roof **22.**

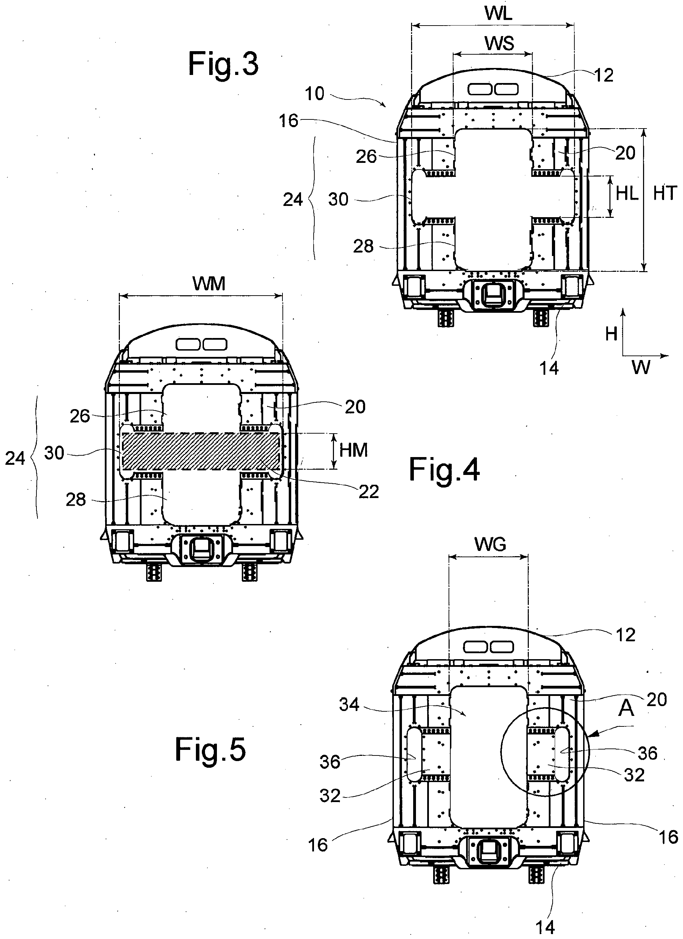

To this end, the end wall **22** has a specific structure illustrated in figures **3** to **5****.** Before the ceiling module is inserted, the end wall has a cross-shaped multipurpose opening **24,** which comprises an upper small width section **26,** a lower small width section **28** and an intermediate large width section **30,** which has a width **WL,** measured in a width direction **W** of the car body **10,** substantially greater than the width **WS** of the upper and lower sections. The upper and lower sections are centrally positioned and have a width intended for a gangway opening. As an example, the width **WS** of the upper and lower sections **26, 28** can be smaller than 1500 mm, and is preferably greater than 1000 mm, while the large width section **30** has a width **WL** greater than 1500 mm, for example greater than 1800 mm, and preferably smaller than 2400 mm, preferably smaller than 2200 mm. The overall height **HT** of the multipurpose opening **24** , measured in a height direction **H** of the car body **10,** is that of a usual gangway opening, e.g. 2000 to 2200 mm, while the height **HL** of the intermediate large width section is substantially smaller, e.g. 400 to 800 mm.

As schematically illustrated in figures **2** and **4****,** the dimensions of the large width section **28** of the multipurpose opening **24** make it possible to insert the ceiling module **22,** provided a width **WM** of the ceiling module **22** is smaller than the width **WS** of the large width section **30** of the multipurpose opening **24** and a thickness **HM** of the ceiling module **22** is smaller than the height **HL** of the large width section **30** of the multipurpose opening **24.** The width of the ceiling module **WM** is preferably greater than 1500 mm, for example greater than 1800 mm, and preferably smaller than 2400 mm, preferably smaller than 2200 mm. The length of the ceiling module LM can be substantially larger than the width **WL** of the large width section **28** of the multipurpose opening, and is preferably larger than 2000 mm, e.g. larger than 3000 mm, and preferably smaller than 9000 mm, e.g. smaller than 6000 mm.

The ceiling module **22** can be introduced into the interior space **100** of the car body **10** through the large width section **30** of the multipurpose opening **24** by means of temporary tracks (not shown) extending through the lower small width section **28** of the multipurpose opening **24** in a length direction of the car body **10** and preferably fixed to the underframe **14** of the car body **10.**

Alternatively, the ceiling module **22** can be introduced into the interior space **100** of the car body **10** through the large width section **30** of the multipurpose opening **24** by means of jig (not shown) carried by a supporting structure movable in the length direction of the car body **10** and supported on the ground outside the car body **10.**

Before being introduced into the interior space **100,** the ceiling module **22** may already be equipped with one or more of the following: harnesses, high-voltage electric equipment, low-voltage electric equipment, ventilation ducts, insulation, interior panels, luggage racks, signalisation equipment and lighting.

After the ceiling module **22** has been inserted through the multipurpose opening **24,** the large width section **30** of the multipurpose opening **24** can be partially closed with two structural plates **32,** which are bolted or otherwise structurally affixed to the end wall **20** such as to be aligned with the edges of the upper and lower sections **26, 28** of the multipurposed opening **24** and to delineate a gangway opening **34** having a gangway width **WG** equal to the width **WS** of the upper and lower sections **26, 28.** Optionally, side openings **36** are preserved on each side of the gangway opening **34** for jumper cables and/or ducts between carriages.

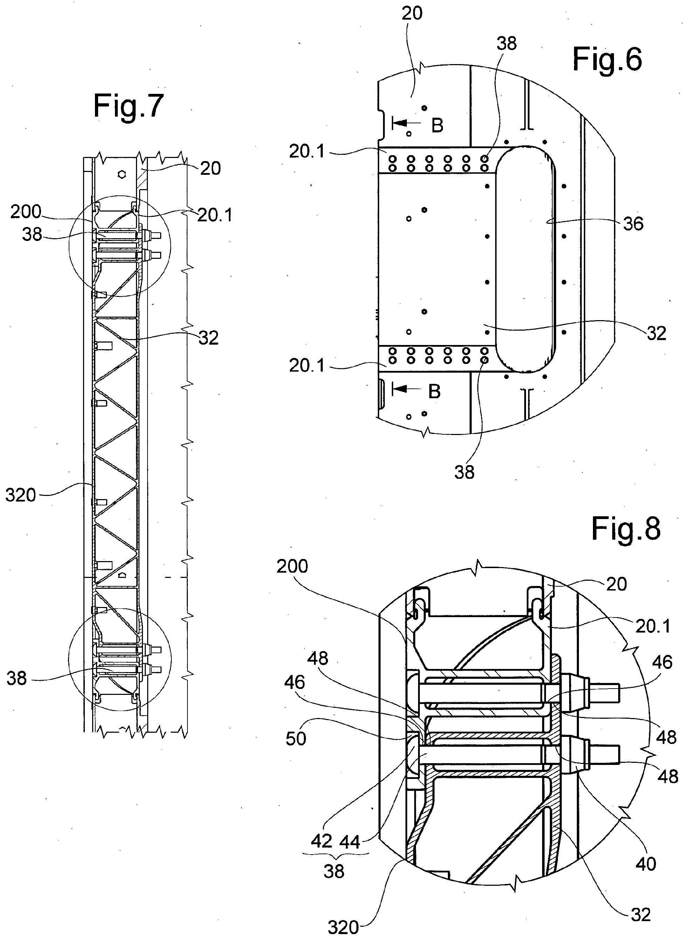

In this embodiment, the structural plates are structurally fixed to an edge **20.1** beam of the end wall **20** by means of mechanical fasteners, more specifically bolts **38** and nuts **40,** as illustrated in detail in figures **6** to **8****.** The bolts **38** have a head **42** and a stem **44** protruding from the head. The structural plates **32** and the edge beam **20.1** of the end wall **20** are provided with bores **46, 48** for the stems **44** of the bolts **38** while the heads **42** of the bolts **38** are accommodated in counterbores **50** open on an outside face **200** of the edge beam **20.1** of the end wall **20.** The structural plates **32** have a flat outside face **320** flush with a flat outside face **200** of the end wall, so that a gangway can be attached in a sealed manner to the flat outside face **200** of the end wall **20** and to the flat outside face **320** of the structural plates **32.**

## Claims

1. A method of assembling a ceiling module (22) in a car body (10) of a rail vehicle, the car body (10) having a roof (12), an underframe (14), side walls (16) and at least one end wall (20) assembled with one another so as to define an interior space (100) of the car body (10), the end wall (20) being provided with a multipurpose opening (24), the ceiling module (22) having a length (LM), a width (WM) and a thickness (HM),
the method comprising:
- introducing the ceiling module (22) into the interior space (100) of the car body (10) through a large width section (30) of the multipurpose opening (24), with the width (WM) of the ceiling module (22) extending in a width direction of the large width section (30) of the multipurpose opening (24), and subsequently
- partially closing the large width section (30) of the multipurpose opening (24) with one or more structural elements (32) structurally affixed to the end wall (20) such as to delineate, with one or more small width sections (26, 28) of the multipurposed opening, a gangway opening (34) having a gangway width (WG) smaller than the width (WM) of the ceiling module (22),
wherein before the ceiling module (22) is introduced into the interior space (100), the multipurpose opening (24) is cross-shaped, the large width section (30) being located between an upper small width section (26) and a lower small width section (28) of the multipurpose opening (24),
wherein the ceiling module (22) is introduced into the interior space (100) of the car body (10) through the large width section (30) of the multipurpose opening (24) either by means of temporary tracks extending through the multipurpose opening (24) in a length direction of the car body (10) or by means of jig carried by a supporting structure supported on the ground outside the car body (10).

2. The method of claim 1, wherein before being introduced into the interior space (100), the ceiling module (22) is provided with one or more of the following: harnesses, high-voltage electric equipment, low-voltage electric equipment, ventilation ducts, thermal insulation, acoustic insulation, interior panels, luggage racks, signalisation equipment, lighting.

3. The method of claim 2, wherein the thermal insulation is provided on a top surface of the ceiling module.

4. The method of any one of the preceding claims, wherein the width (WM) of the ceiling module (22) is greater than 1100 mm.

5. The method of claim 5, wherein the width (WM) of the ceiling module (22) is smaller than 2400 mm, preferably smaller than 2200 mm.

6. The method of any one of the preceding claims, wherein the gangway width (WG) is smaller than 1100 mm.

7. The method of claim 5, wherein the gangway width (WG) is greater than 1000 mm.

8. The method of any one of the preceding claims, wherein once the one or more structural elements (32) have been structurally fixed to the end wall (20), at least one of the one or more structural elements (32) is located between the gangway opening (34) and a side opening (36) defined in an uncovered part of the large width section (30) of the multipurpose opening (24).

9. The method of any one of the preceding claims, wherein the one or more structural elements (32) have a flat outside face (320) flush with a flat outside face (200) of the end wall (20).

10. The method of claim 9, further including attaching a gangway in a sealed manner to the flat outside face (200) of the end wall (20) and to the flat outside face (320) of the structural elements (32).

11. The method of any one of the preceding claims, wherein the one or more structural elements (32) are structurally fixed to the end wall (20) by means of mechanical fasteners (38, 40), in particular rivets, screws or bolts.

12. The method of claim 11, wherein at least some of the mechanical fasteners (38, 40) have a head (42) and a stem (44) protruding from the head (42), and the structural elements (32) and/or the end wall (20) are provided with bores (46, 48) for the stems (44) of the mechanical fasteners (38, 40) and counterbores (50) to accommodate the heads (42) of the mechanical fasteners (38) on an outside face of the end wall (20) and/or of the one or more structural elements (32).

13. A car body (10) of a rail vehicle comprising a roof (12), an underframe (14), side walls (16) and at least one end wall (20) assembled with one another so as to define an interior space (100) of the car body (10), the end wall (20) being provided with a multipurpose opening (24), the car body (10) further comprising a ceiling module (22) having a length (LM), a width (WM) and a thickness (HM),
**characterised in that** the multipurpose opening (24) is cross-shaped with a large width section (30), an upper small width section (26) and a lower small width section (28), the large width section (30) being located between the upper small width section (26) and the lower small width section (28), wherein the large width section (30) of the multipurpose opening (24) has a width (WL) greater than the width (WM) of the ceiling module and is partially closed with one or more structural elements (32) structurally affixed to the end wall (20) such as to delineate, with the upper and lower small width sections (26, 28) of the multipurposed opening, a gangway opening (34) having a gangway width (WG) smaller than the width (WM) of the ceiling module (22).

## Patentansprüche

1. Verfahren zum Montieren eines Deckenmoduls (22) in eine Karosserie (10) eines Schienenfahrzeugs, wobei die Karosserie (10) ein Dach (12), einen Unterrahmen (14), Seitenwände (16) und mindestens eine Stirnwand (20) aufweist, die so miteinander montiert sind, dass sie einen Innenraum (100) der Karosserie (10) definieren, wobei die Stirnwand (20) mit einer Mehrzwecköffnung (24) versehen ist und das Deckenmodul (22) eine Länge (LM), eine Breite (WM) und eine Dicke (HM) aufweist,
das Verfahren umfassend:
- Einführen des Deckenmoduls (22) in den Innenraum (100) der Karosserie (10) durch einen großen Breitenabschnitt (30) der Mehrzwecköffnung (24), wobei die Breite (WM) des Deckenmoduls (22) in einer Breitenrichtung des großen Breitenabschnitts (30) der Mehrzwecköffnung (24) verläuft, und anschließend
- teilweises Verschließen des großen Breitenabschnitts (30) der Mehrzwecköffnung (24) mit einem oder mehreren Strukturelementen (32), die strukturell an der Stirnwand (20) befestigt sind, um mit einem oder mehreren kleinen Breitenabschnitten (26, 28) der Mehrzwecköffnung eine Gangöffnung (34) abzugrenzen, die eine Gangbreite (WG) aufweist, die kleiner ist als die Breite (WM) des Deckenmoduls (22),
wobei vor dem Einführen des Deckenmoduls (22) in den Innenraum (100) die Mehrzwecköffnung (24) kreuzförmig ist, wobei der große Breitenabschnitt (30) zwischen einem oberen kleinen Breitenabschnitt (26) und einem unteren kleinen Breitenabschnitt (28) der Mehrzwecköffnung (24) angeordnet ist,
wobei das Deckenmodul (22) durch den großen Breitenabschnitt (30) der Mehrzwecköffnung (24) in den Innenraum (100) der Karosserie (10) eingeführt wird, entweder mittels temporärer Schienen, die sich durch die Mehrzwecköffnung (24) in einer Längsrichtung der Karosserie (10) erstrecken, oder mittels einer Vorrichtung, die von einer Stützstruktur getragen wird, die außerhalb der Karosserie (10) auf dem Boden aufliegt.

2. Verfahren nach Anspruch 1, wobei das Deckenmodul (22) vor dem Einführen in den Innenraum (100) mit einem oder mehreren der folgenden Elemente versehen wird: Kabelbäume, elektrische Hochspannungsausrüstung, elektrische Niederspannungsausrüstung, Lüftungskanäle, Wärmedämmung, Schalldämmung, Innenverkleidungen, Gepäckablagen, Signalisierungsausrüstung, Beleuchtung.

3. Verfahren nach Anspruch 2, wobei die Wärmedämmung auf der Oberseite des Deckenmoduls bereitgestellt wird.

4. Verfahren nach einem der vorstehenden Ansprüche, wobei die Breite (WM) des Deckenmoduls (22) größer als 1100 mm ist.

5. Verfahren nach Anspruch 5, wobei die Breite (WM) des Deckenmoduls (22) kleiner als 2400 mm, vorzugsweise kleiner als 2200 mm ist.

6. Verfahren nach einem der vorstehenden Ansprüche, wobei die Gangbreite (WG) kleiner als 1100 mm ist.

7. Verfahren nach Anspruch 5, wobei die Gangbreite (WG) größer als 1000 mm ist.

8. Verfahren nach einem der vorstehenden Ansprüche, wobei nach der strukturellen Befestigung des einen oder der mehreren Strukturelemente (32) an der Stirnwand (20) mindestens eines des einem oder der mehreren Strukturelemente (32) zwischen der Gangöffnung (34) und einer Seitenöffnung (36) angeordnet ist, die in einem nicht abgedeckten Teil des großen Breitenabschnitts (30) der Mehrzwecköffnung (24) definiert ist.

9. Verfahren nach einem der vorstehenden Ansprüche, wobei das eine oder die mehreren Strukturelemente (32) eine flache Außenfläche (320) aufweisen, die mit einer flachen Außenfläche (200) der Stirnwand (20) bündig ist.

10. Verfahren nach Anspruch 9, ferner einschließend das Anbringen eines Gangs in einer abgedichteten Weise an der flachen Außenfläche (200) der Stirnwand (20) und an der flachen Außenfläche (320) der Strukturelemente (32).

11. Verfahren nach einem der vorstehenden Ansprüche, wobei das eine oder die mehreren Strukturelemente (32) mittels mechanischer Befestigungselemente (38, 40), insbesondere Niete, Schrauben oder Bolzen, strukturell an der Stirnwand (20) befestigt sind.

12. Verfahren nach Anspruch 11, wobei mindestens einige der mechanischen Befestigungselemente (38, 40) einen Kopf (42) und einen aus dem Kopf (42) herausragenden Schaft (44) aufweisen und die Strukturelemente (32) und/oder die Stirnwand (20) mit Bohrungen (46, 48) für die Schäfte (44) der mechanischen Befestigungselemente (38, 40) und Senkbohrungen (50) zur Aufnahme der Köpfe (42) der mechanischen Befestigungselemente (38) an einer Außenfläche der Stirnwand (20) und/oder des einen oder der mehreren Strukturelemente (32) versehen sind.

13. Karosserie (10) eines Schienenfahrzeugs, umfassend ein Dach (12), einen Unterrahmen (14), Seitenwände (16) und mindestens eine Stirnwand (20), die so miteinander montiert sind, dass sie einen Innenraum (100) der Karosserie (10) bilden, wobei die Stirnwand (20) mit einer Mehrzwecköffnung (24) versehen ist, die Karosserie (10) ferner umfassend ein Deckenmodul (22) aufweisend eine Länge (LM), eine Breite (WM) und eine Dicke (HM),
**dadurch gekennzeichnet, dass** die Mehrzwecköffnung (24) kreuzförmig ist und einen Abschnitt (30) mit großer Breite, einen oberen Abschnitt (26) mit kleiner Breite und einen unteren Abschnitt (28) mit kleiner Breite aufweist, wobei der Abschnitt (30) mit großer Breite zwischen dem oberen Abschnitt (26) mit kleiner Breite und dem unteren Abschnitt (28) mit kleiner Breite angeordnet ist, wobei der Abschnitt mit großer Breite (30) der Mehrzwecköffnung (24) eine Breite (WL) aufweist, die größer als die Breite (WM) des Deckenmoduls ist, und teilweise mit einem oder mehreren Strukturelementen (32) verschlossen ist, die strukturell an der Stirnwand (20) befestigt sind, um mit dem oberen und unteren Abschnitt mit kleiner Breite (26, 28) der Mehrzwecköffnung eine Gangöffnung (34) abzugrenzen, die eine Gangbreite (WG) aufweist, die kleiner ist als die Breite (WM) des Deckenmoduls (22).

## Revendications

1. Procédé d'assemblage d'un module de plafond (22) dans une carrosserie (10) d'un véhicule ferroviaire, la carrosserie (10) ayant un toit (12), un châssis (14), des parois latérales (16) et au moins une paroi d'extrémité (20) assemblées l'une à l'autre de manière à définir un espace intérieur (100) de la carrosserie (10), la paroi d'extrémité (20) étant pourvue d'une ouverture polyvalente (24), le module de plafond (22) ayant une longueur (LM), une largeur (WM) et une épaisseur (HM),
le procédé comprenant :
- l'introduction du module de plafond (22) dans l'espace intérieur (100) de la carrosserie (10) par une section de grande largeur (30) de l'ouverture polyvalente (24), la largeur (WM) du module de plafond (22) s'étendant dans le sens de la largeur de la section de grande largeur (30) de l'ouverture polyvalente (24), et ensuite
- la fermeture partielle de la section de grande largeur (30) de l'ouverture polyvalente (24) avec un ou plusieurs éléments structurels (32) fixés structurellement à la paroi d'extrémité (20) de manière à délimiter, avec une ou plusieurs sections de petite largeur (26, 28) de l'ouverture polyvalente, une ouverture de passerelle (34) ayant une largeur de passerelle (WG) inférieure à la largeur (WM) du module de plafond (22),
dans lequel, avant que le module de plafond (22) ne soit introduit dans l'espace intérieur (100), l'ouverture polyvalente (24) est en forme de croix, la section de grande largeur (30) étant située entre une section de petite largeur supérieure (26) et une section de petite largeur inférieure (28) de l'ouverture polyvalente (24),
dans lequel le module de plafond (22) est introduit dans l'espace intérieur (100) de la carrosserie (10) à travers la section de grande largeur (30) de l'ouverture polyvalente (24), soit au moyen de rails temporaires s'étendant à travers l'ouverture polyvalente (24) dans le sens de la longueur de la carrosserie (10), soit au moyen d'un gabarit porté par une structure de support fixée au sol à l'extérieur de la carrosserie (10).

2. Procédé selon la revendication 1, dans lequel, avant d'être introduit dans l'espace intérieur (100), le module de plafond (22) est équipé d'un ou de plusieurs des éléments suivants : harnais, équipement électrique à haute tension, équipement électrique à basse tension, conduits de ventilation, isolation thermique, isolation acoustique, panneaux intérieurs, porte-bagages, équipement de signalisation, éclairage.

3. Procédé selon la revendication 2, dans lequel l'isolation thermique est fournie sur une surface supérieure du module de plafond.

4. Procédé selon l'une quelconque des revendications précédentes, dans lequel la largeur (WM) du module de plafond (22) est supérieure à 1100 mm.

5. Procédé selon la revendication 5, dans lequel la largeur (WM) du module de plafond (22) est inférieure à 2400 mm, de préférence inférieure à 2200 mm.

6. Procédé selon l'une quelconque des revendications précédentes, dans lequel la largeur de passerelle (WG) est inférieure à 1100 mm.

7. Procédé selon la revendication 5, dans lequel la largeur de passerelle (WG) est supérieure à 1000 mm.

8. Procédé selon l'une quelconque des revendications précédentes, dans lequel, une fois que le ou les éléments structurels (32) ont été fixés structurellement à la paroi d'extrémité (20), au moins un du ou des éléments structurels (32) est situé entre l'ouverture de passerelle (34) et une ouverture latérale (36) définie dans une partie non couverte de la section de grande largeur (30) de l'ouverture polyvalente (24).

9. Procédé selon l'une quelconque des revendications précédentes, dans lequel le ou les éléments structurels (32) ont une face extérieure plate (320) affleurant une face extérieure plate (200) de la paroi d'extrémité (20).

10. Procédé selon la revendication 9, comportant en outre la fixation d'une passerelle de manière étanche à la face extérieure plate (200) de la paroi d'extrémité (20) et à la face extérieure plate (320) des éléments structurels (32).

11. Procédé selon l'une quelconque des revendications précédentes, dans lequel le ou les éléments structurels (32) sont fixés structurellement à la paroi d'extrémité (20) au moyen d'attaches mécaniques (38, 40), en particulier des rivets, des vis ou des boulons.

12. Procédé selon la revendication 11, dans lequel au moins certaines des fixations mécaniques (38, 40) ont une tête (42) et une tige (44) dépassant de la tête (42), et les éléments structurels (32) et/ou la paroi d'extrémité (20) sont pourvus d'alésages (46, 48) pour les tiges (44) des fixations mécaniques (38, 40) et de lamages (50) pour accueillir les têtes (42) des fixations mécaniques (38) sur une face extérieure de la paroi d'extrémité (20) et/ou du ou des éléments structurels (32).

13. Carrosserie (10) d'un véhicule ferroviaire comprenant un toit (12), un châssis (14), des parois latérales (16) et au moins une paroi d'extrémité (20) assemblées l'une à l'autre de manière à définir un espace intérieur (100) de la carrosserie (10), la paroi d'extrémité (20) étant pourvue d'une ouverture polyvalente (24), la carrosserie (10) comprenant en outre un module de plafond (22) ayant une longueur (LM), une largeur (WM) et une épaisseur (HM),
**caractérisée en ce que** l'ouverture polyvalente (24) est en forme de croix avec une section de grande largeur (30), une section de petite largeur supérieure (26) et une section de petite largeur inférieure (28), la section de grande largeur (30) étant située entre la section de petite largeur supérieure (26) et la section de petite largeur inférieure (28), dans laquelle la section de grande largeur (30) de l'ouverture polyvalente (24) a une largeur (WL) supérieure à la largeur (WM) du module de plafond et est partiellement fermée par un ou plusieurs éléments structurels (32) fixés structurellement à la paroi d'extrémité (20) de manière à délimiter, avec les sections de petite largeur supérieure et inférieure (26, 28) de l'ouverture polyvalente, une ouverture de passerelle (34) ayant une largeur de passerelle (WG) inférieure à la largeur (WM) du module de plafond (22).
